(19) Europäisches Patentamt
European Patent Office
Office européen des brevets

(11) **EP 1 472 783 B1**

(12) **EUROPÄISCHE PATENTSCHRIFT**

(45) Veröffentlichungstag und Bekanntmachung des Hinweises auf die Patenterteilung:
**31.10.2007 Patentblatt 2007/44**

(21) Anmeldenummer: **03714719.6**

(22) Anmeldetag: **28.01.2003**

(51) Int Cl.:
**H02P 6/14** (2006.01)

(86) Internationale Anmeldenummer:
**PCT/EP2003/000834**

(87) Internationale Veröffentlichungsnummer:
**WO 2003/067747 (14.08.2003 Gazette 2003/33)**

(54) **VERFAHREN ZUM KOMMUTIEREN EINES ELEKTRONISCH KOMMUTIERTEN MOTORS, UND MOTOR ZUR DURCHF HRUNG EINES SOLCHEN VERFAHRENS**

METHOD FOR COMMUTATING AN ELECTRONICALLY COMMUTATED MOTOR AND MOTOR FOR CARRYING OUT SAID METHOD

PROCEDE PERMETTANT DE COMMUTER UN MOTEUR ELECTRONIQUEMENT COMMUTE ET MOTEUR PERMETTANT LA MISE EN OEUVRE DE CE PROCEDE

(84) Benannte Vertragsstaaten:
**AT BE BG CH CY CZ DE DK EE ES FI FR GB GR HU IE IT LI LU MC NL PT SE SI SK TR**

(30) Priorität: **06.02.2002 DE 10204889**

(43) Veröffentlichungstag der Anmeldung:
**03.11.2004 Patentblatt 2004/45**

(73) Patentinhaber: **ebm-papst St. Georgen GmbH & Co. KG**
**78112 St. Georgen (DE)**

(72) Erfinder: **BERROTH, Hansjörg**
**78052 VS-Obereschach (DE)**

(74) Vertreter: **Raible, Tobias**
**Raible & Raible**
**Schoderstrasse 10**
**70192 Stuttgart (DE)**

(56) Entgegenhaltungen:
WO-A-86/01053          US-A- 4 376 261
US-A- 4 482 849          US-A- 4 710 684

**Beschreibung**

Die Erfindung betrifft ein Verfahren zum Kommutieren eines elektronisch kommutierten Motors, sowie einen Motor zur Durchführung eines solchen Verfahrens.

Elektronisch kommutierte Motoren arbeiten mit einer Statorwicklung, die eine kleine Zahl von Phasen (Strängen) hat. Die hauptsächlich verwendeten Motoren haben eine, zwei oder drei Phasen (Stränge). Diese Phasen können je nach Art der Elektronik in unterschiedlicher Weise mit Strom gespeist werden, wobei die Speisung über eine Vollbrük-kenschaltung besondere Vorteile bietet.

Bei einer Vollbrückenschaltung muss man Maßnahmen vorsehen, welche sicherstellen, dass in der Vollbrücke kein Kurzschluss entsteht. Hierfür gibt es vielerlei Schaltungen, z.B. die Schaltung nach US 4 376 261, die auf der Überlegung beruht, zwischen zwei Steuerimpulsen eine kurze Lücke zu erzeugen. Wird die Vollbrücke über einen Mikroprozessor ($\mu$P) gesteuert, so kann man in das Programm entsprechende Strompausen "einbauen", welche garantieren, dass bei einer Kommutierung der eine Transistor ausschaltet, dann z.B. 50 $\mu$s lang gewartet wird, und erst dann der andere Transistor eingeschaltet wird. Dies setzt aber voraus, dass ein Mikroprozessor verwendet wird, was für viele Anwendungen zu teuer ist. Außerdem muss die Strompause von z.B. 50 $\mu$s so groß gewählt werden, dass sie bei allen Betriebsbedingungen ausreichend groß ist, und es kann sein, dass hierdurch besonders bei höheren Drehzahlen Leistung "verschenkt" wird, weil die Strompause bei manchen Betriebsbedingungen kürzer sein könnte.

Es ist deshalb eine Aufgabe der Erfindung, ein neues Verfahren zum Kommutieren eines elektronisch kommutierten Motors, und einen Motor mit Vollbrückenschaltung zur Durchführung eines derartigen Verfahrens, bereitzustellen.

Nach der Erfindung wird diese Aufgabe gelöst durch ein Verfahren gemäß Patentanspruch 1. Jedem MOSFET der Brücke ist also ein Komparator zugeordnet. Soll ein solcher MOSFET abgeschaltet werden, so geschieht das direkt über seinen Komparator. Soll ein solcher MOSFET eingeschaltet werden, so überwacht der zugeordnete Komparator das Gate-Potenzial des abzuschaltenden MOSFET, also in der Praxis dessen Source-Gate-Spannung. Dadurch erhält man ein zuverlässiges Signal dafür, wann dieser MOSFET sperrt, und erst dann wird der einzuschaltende MOSFET eingeschaltet. Sehr vorteilhaft ist, dass bei diesem Verfahren die Komparatoren je nach ihrer augenblicklichen Funktion (Ausschalten oder Einschalten) in verschiedener Weise ausgenutzt werden, nämlich im einen Fall als Verstärker, im anderen Fall als Komparator. Durch die Optimierung der Strompause kann zudem in manchen Fällen die Leistung eines solchen Motors erhöht werden.

Eine andere Lösung der gestellten Aufgabe ergibt sich durch einen elektronisch kommutierten Motor gemäß Patentanspruch 2. Ein solcher Motor verbindet eine sichere Kommutierung mit sehr einfachem und preiswertem Aufbau, guter Leistung, ruhigem Lauf, und langer Lebensdauer der MOSFETs in der Vollbrückenschaltung.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:

Fig. 1 ein Schaltbild einer bevorzugten Ausführungsform eines elektronisch kommutierten Motors zur Durchführung eines erfindungsgemäßen Verfahrens,

Fig. 2 ein Schaubild mit Impulsfolgen u1 und u2, zur Erläuterung der Fig. 1, und

Fig. 3 ein Schaltbild zur beispielhaften Erläuterung der Erzeugung von zwei gegenphasigen Rotorstellungssignalen u1, u2, deren Amplituden von der Betriebsspannung $U_B$ des Motors abhängig sind.

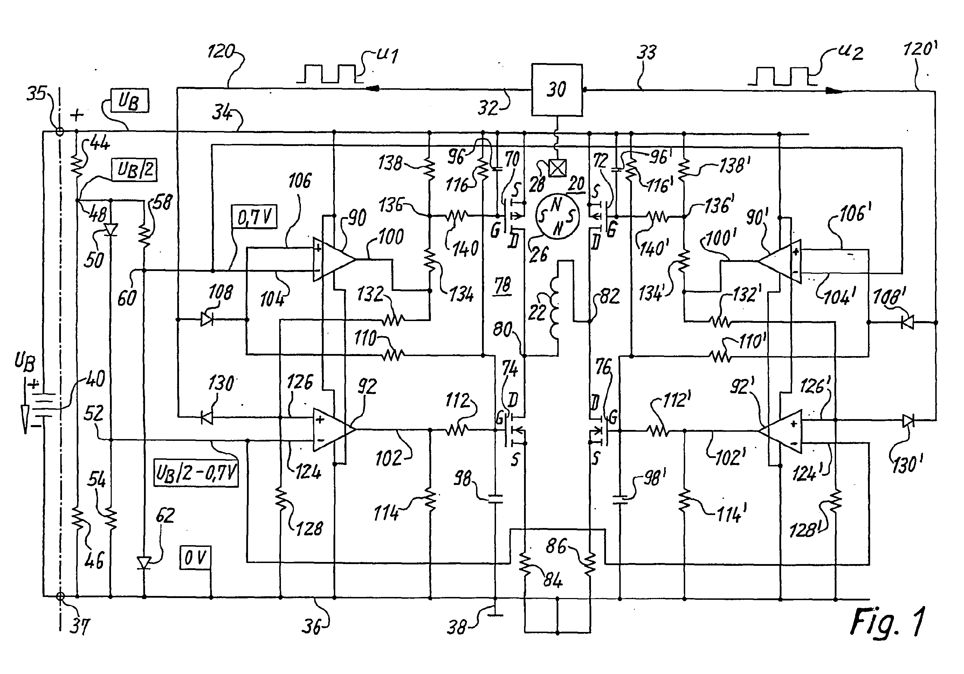

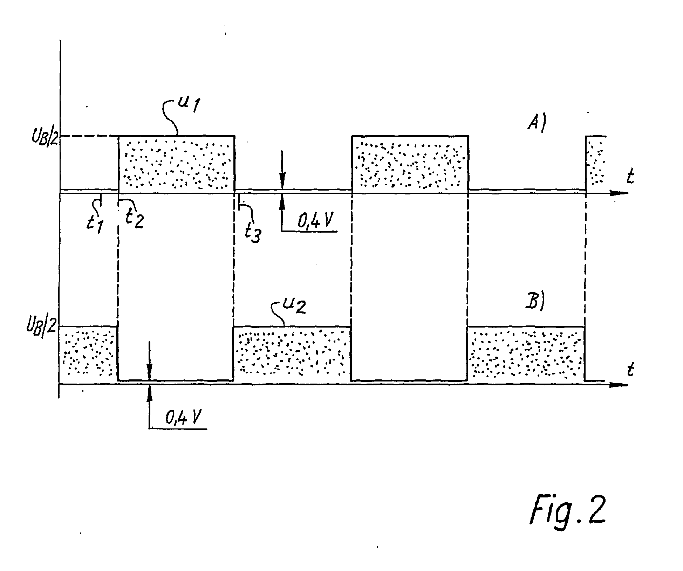

**Fig. 1** zeigt zur Erläuterung der Erfindung einen einsträngigen zweipulsigen elektronisch kommutierten Motor 20 mit einem einzigen Statorwicklungsstrang ("Phase") 22, ferner mit einem permanentmagnetischen Rotor 26, der als vierpoliger Rotor dargestellt ist, und mit einem Hallgenerator 28, dessen Ausgangssignal einer Anordnung 30 mit einem Ausgang 32 und einem hierzu antivalenten Ausgang 33 zugeführt wird. In der Anordnung 30 wird das Ausgangssignal des Hallgenerators 28 in zwei rechteckförmige Signale u1 und u2 umgewandelt, welche in Fig. 2 dargestellt sind und gegenphasig zueinander verlaufen. Diese können bei Bedarf in bekannter Weise abhängig von der Drehzahl des Motors 20 in der Phase verschoben werden, was nicht dargestellt ist.

Der Motor 20 wird über eine positive Anschlussleitung 34 und eine negative Anschlussleitung 36, die gewöhnlich mit Masse 38 verbunden ist, mit Spannung versorgt. Die Leitungen 34, 36 können über Anschlussklemmen 35 bzw. 37 an eine Batterie 40 angeschlossen sein, deren Spannung mit $U_B$ bezeichnet ist und in diesem Fall gewöhnlich im Bereich zwischen 5 und 32 V liegt. Sie können auch von einem Gleichrichter gespeist werden und werden auch als Gleichstrom-Zwischenkreis (dc link) bezeichnet.

Zwischen den Leitungen 34 und 36 liegt ein Spannungsteiler, z.B. mit zwei gleichen Widerständen 44, 46, so dass an deren Verbindungspunkt 48 ein Potenzial von etwa $U_B/2$ liegt, nämlich von etwas weniger als der halben Betriebsspannung. Die Amplitude der Impulse u1 und u2 ist eine Funktion von $U_B$ und beträgt bevorzugt ebenfalls $U_B/2$.

Der Knotenpunkt 48 ist mit der Anode einer Diode 50 verbunden, deren Katode über einen Knotenpunkt 52 und einen Widerstand 54 mit der negativen Leitung 36 verbunden ist. Man erhält dadurch am Knotenpunkt 52 ein Potenzial von etwa

$$(U_B/2 - 0,7 \text{ V}) \qquad ...(1),$$

das also um die Schwellenspannung der Diode 50 (ca. 0,7 V) niedriger ist als das Potenzial $U_B/2$, d.h. wenn sich die Betriebsspannung $U_B$ ändert, z.B. weil die Batterie 40 stark entladen ist, ändert sich das Potenzial $U_B/2$ am Punkt 48, und ebenso ändert sich das Potenzial $(U_B/2 - 0,7 \text{ V})$, am Punkt 52, so dass sich diese Potenziale ändern, aber zwischen den Punkten 48 und 52 eine Differenz von ca. 0,7 V aufrechterhalten wird.

Der Punkt 48 ist auch über einen Widerstand 58 und einen Knotenpunkt 60 mit der Anode einer Diode 62 verbunden, deren Katode mit der negativen Leitung 36 verbunden ist. Dadurch erhält man am Knotenpunkt 60 ein Potenzial, das um etwa 0,7 V höher ist als das Potenzial (0 V) der Leitung 36.

Zur Steuerung des Stromes im Strang 22 des Motors 20 dienen vier MOSFET-Transistoren, nämlich oben links ein p-Kanal-MOSFET 70, oben rechts ein p-Kanal-MOSFET 72, unten links ein n-Kanal-MOSFET 74, und unten rechts ein n-Kanal-MOSFET 76. Die vier Transistoren 70 bis 76 bilden zusammen eine Vollbrückenschaltung 78 in Form einer H-Brücke. Diese wird gebildet von zwei Halbbrücken, nämlich einmal den linken MOSFETs 70 und 74, und zum anderen den rechten MOSFETs 72 und 76. Die Source S der Transistoren 70 und 72 ist mit der positiven Leitung 34 verbunden. Die Drain-Anschlüsse D der Transistoren 70 und 74 sind mit einem Knotenpunkt 80 und einem Anschluss des Wicklungsstrangs 22 verbunden. Die Drain-Anschlüsse D der Transistoren 72 und 76 sind mit einem Knotenpunkt 82 und dem anderen Anschluss des Wicklungsstranges 22 verbunden. Die Source S des Transistors 74 ist über einen Widerstand 84 mit der negativen Leitung 76 verbunden, die Source S des Transistors 76 über einen Widerstand 86. Die Widerstände 84 und 86 können zur Strommessung dienen, z.B. für eine (nicht dargestellte) Strombegrenzung. Falls diese nicht gewünscht wird, entfallen diese Widerstände.

Wenn die Transistoren 70 und 76 leitend sind, fließt ein Strom von der positiven Leitung 34 über den Transistor 70 und den Anschluss 80 zum Strang 22 und weiter über den Transistor 76 und den Widerstand 86 zur negativen Leitung 36. Sind dagegen die Transistoren 72 und 74 leitend, so fließt ein Strom von der positiven Leitung 34 über den Transistor 72, den Anschluss 82, den Wicklungsstrang 22, den Transistor 74 und den Widerstand 84 zur negativen Leitung 36.

Bei der Umschaltung zwischen diesen beiden Zuständen darf es nicht vorkommen, dass die Transistoren 70 und 74 während einer kurzen Zeitspanne gleichzeitig leitend sind, oder dass die Transistoren 72 und 76 kurzzeitig beide leitend sind, denn der entstehende Kurzschlussstrom (shoot-through) würde diese Transistoren zerstören oder zumindest ihre Lebensdauer verkürzen. Die vorliegende Erfindung soll das verhindern oder zumindest stark reduzieren.

Zur Steuerung des oberen linken Transistors 70 dient ein Komparator 90, zur Steuerung des unteren linken Transistors 74 ein Komparator 92. In Fig. 1 ist die rechte Hälfte der Schaltung symmetrisch zur linken Hälfte, und deshalb werden die dortigen Bauelemente gleich bezeichnet, aber mit einem nachgestellten Apostroph. Der obere rechte Transistor 72 wird also gesteuert von einem Komparator 90', und der untere rechte Transistor 76 von einem Komparator 92'. (Die weiteren Bauelemente der rechten Seite werden nicht beschrieben. Zu ihnen wird verwiesen auf die Beschreibung zur linken Seite der Fig. 1).

Das Gate G des Transistor 70 ist über einen Kondensator 96, das Gate G des Transistors 72 über einen Kondensator 96' mit der positiven Leitung 34 verbunden. Das Gate G des Transistors 74 ist über einen Kondensator 98 und das Gate G des Transistors 76 über einen Kondensator 98' mit der negativen Leitung 36 verbunden. Diese Kondensatoren verhindern abrupte Änderungen der Spannung zwischen Source (S) und Gate (G) der Transistoren 70 bis 76 und bewirken je nach ihrer Größe eine Verlangsamung der Schaltvorgänge, wodurch der Motor 20 ruhiger läuft.

**Ein- und Ausschalten der p-Kanal-Transistoren 70 und 72**

Wenn einer der Transistoren 70 oder 72 eingeschaltet werden soll, muss sein Gate-Potenzial in Richtung zur negativen Leitung 36 verändert werden, oder anders gesagt, seine Source-Gate-Spannung $U_{SG}$ muss auf einen Wert im bevorzugten Bereich 1,5 ... 4 V, maximal 20 V, erhöht werden. Deshalb wird der Ausgang 100 des oberen Komparators 90 bzw. der Ausgang 100' des oberen Komparators 90' in diesem Fall intern mit der negativen Leitung 36 verbunden, wodurch die Spannung $U_{SG}$ entsprechend zunimmt, da das Potenzial am Ausgang 100 im wesentlichen das Potenzial am Gate des Transistors 70 bestimmt.

Soll umgekehrt einer der Transistoren 70 oder 72 abgeschaltet werden, so muss sein Gate-Potenzial in Richtung zur positiven Leitung 34 verändert werden, so dass $U_{SG}$ kleiner als 1,4 V wird. Dies geschieht dadurch, dass der Ausgang 100 bzw. 100' hochohmig gemacht wird.

Beim Übergang vom eingeschalteten zum ausgeschalteten Zustand verändert sich also das Potenzial am Gate G des betreffenden Transistors 70 oder 72 in positiver Richtung, und wenn $U_{SG}$ einen vorgegebenen Wert unterschreitet, bedeutet dies, dass der betreffende Transistor 70 oder 72 sicher gesperrt ist, also sich in einem hochohmigen Zustand befindet.

**Ein- und Ausschalten der n-Kanal-Transistoren 74 und 76**

Wenn einer der Transistoren 74 oder 76 eingeschaltet werden soll, muss sein Gate-Potenzial in Richtung zur positiven Leitung 34 verändert werden, d.h. seine Gate-Source-Spannung $U_{GS}$ muss auf einen bevorzugten Wert im Bereich 1,5 bis 4 V, maximal 20 V, zunehmen. Deshalb wird der Ausgang 102 des unteren Komparators 92 bzw, der Ausgang 102' des unteren Komparators 92' in diesem Fall hochohmig gemacht, wodurch die Spannung $U_{GS}$ des betreffenden Transistors 74 oder 76 ansteigt und dieser leitend wird.

Soll umgekehrt einer der Transistoren 74 oder 76 ausgeschaltet werden, so wird der Ausgang 102 oder 102' mit der negativen Leitung 36 verbunden, wodurch $U_{GS}$ unter 1,4 V sinkt und der betreffende Transistor 74 oder 76 gesperrt wird.

Beim Übergang vom eingeschalteten zum ausgeschalteten Zustand verändert sich also das Potenzial am Gate G des betreffenden Transistors 74 oder 76 in negativer Richtung, und wenn $U_{GS}$ einen vorgegebenen Wert unterschreitet, bedeutet dies, dass der betreffende Transistor 74 oder 76 gesperrt ist, also sich in seinem hochohmigen Zustand befindet.

Der Minus-Eingang 104 des oberen Komparators 90 ist ebenso wie der Minus-Eingang 104' des Komparators 90' mit dem Knotenpunkt 60 verbunden, liegt also auf einem Potenzial von etwa 0,7 V, bezogen auf die negative Leitung 36. Der Plus-Eingang 106 des Komparators 90 ist mit der Katode einer Diode 108 verbunden, ebenso über einen Widerstand 110 mit dem Gate G des unteren linken Transistors 74. Dieses Gate G ist seinerseits über einen Widerstand 112 mit dem Ausgang 102 des unteren linken Komparators 92 und über einen Widerstand 116 mit der positiven Leitung 34 verbunden. Der Ausgang 102 ist auch über einen Widerstand 114 mit der negativen Leitung 36 verbunden. Die Anode der Diode 108 ist mit einem Eingang 120 verbunden, dem im Betrieb ein Rechtecksignal u1 (Fig. 2A) zugeführt wird, welches gegenphasig ist zu einem Rechtecksignal u2 (Fig. 2B), das dem Eingang 120' zugeführt wird.

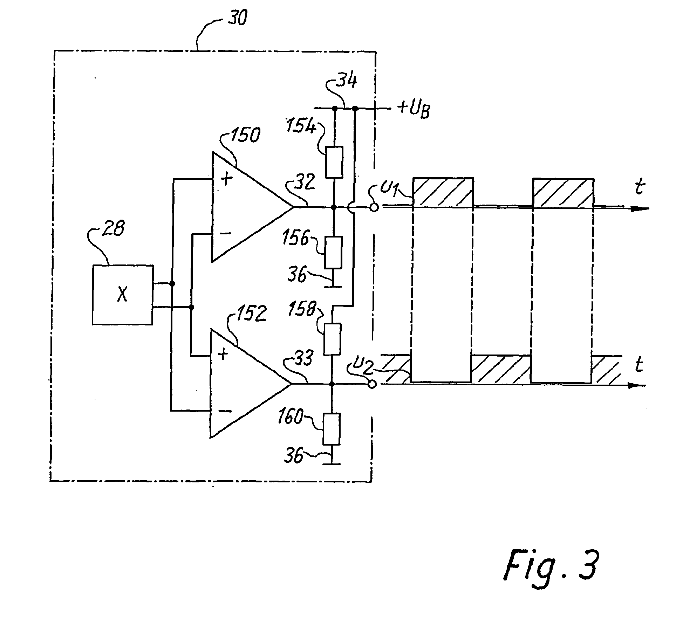

Wie **Fig. 2** zeigt, haben die Signale u1 und u2 bei diesem Beispiel eine Amplitude von $U_B/2$ entsprechend dem logischen Wert "1 ", oder von <0,4 V entsprechend dem logischen Wert "0". Die Amplitude $U_B/2$ ist also eine lineare Funktion der Betriebsspannung $U_B$, vgl. Fig. 3.

Der Minus-Eingang 124 des unteren Komparators 92 ist ebenso wie der Minus-Eingang 124' des unteren Komparators 92' mit dem Knotenpunkt 52 verbunden, an dem ein Potenzial von etwa ($U_B/2$ - 0,7 V) liegt, also z.B. bei einer Spannung $U_B$ = 20 V ein Potenzial von etwa

$$(20/2 - 0,7) = 9,3 \text{ V} \hspace{5cm} ...(2)$$

Der Plus-Eingang 126 des Komparators 92 ist über einen Widerstand 128 mit der negativen Leitung 36 verbunden, ebenso mit der Anode einer Diode 130, deren Katode mit dem Anschluss 120 verbunden ist. Ferner ist der Eingang 126 über einen Widerstand 132 mit dem Ausgang 100 verbunden. Letzterer ist über einen Widerstand 134, einen Knotenpunkt 136 und einen Widerstand 138 mit der positiven Leitung 34 verbunden. Der Knotenpunkt 136 ist über einen Widerstand 140 mit dem Gate G des oberen Transistors 70 verbunden.

Bevorzugte Werte der Bauteile in Fig. 1 für einen Motor mit $U_B$ = 24 V (k = kOhm; R = Widerstand; C = Kondensator)

| | |
|---|---|
| Dioden 50, 62, 108, 108', 130, 130' | bas16 |
| Komparatoren 90, 90', 92, 92' | LM2901 |
| p-Kanal-MOSFETs 70, 72 | IRFR9024 |
| n-Kanal-MOSFETs 74, 76 | IRFR024 |
| C 96, 96', 98, 98' | 4 nF |
| R 44, 46 | 20 k |
| R 54, 58, 110, 110', 128, 128', 132, 132' | 470 k |
| R 134, 134' | 1,1 k |
| R 114, 114', 136, 136' | 3 k |
| R 116,116' | 510 Ohm |
| R 112, 112', 140, 140' | 300 Ohm |
| R 84, 86 | 0 ... 0,1 Ohm |

**Wirkungsweise**

Zur Beschreibung der Wirkungsweise wird nur auf die linke Hälfte der Fig. 1 Bezug genommen, also auf die linke Halbbrücke. Die rechte Hälfte ist identisch ausgebildet und funktioniert deshalb in gleicher Weise, aber da die Signale u1 und u2 in Phasenopposition stehen, verlaufen auf der rechten Seite die Vorgänge mit einer Phasenverschiebung von 180° zu den Vorgängen auf der linken Seite, wie das der Fachmann des Elektromaschinenbaus ohne weiteres versteht. Wenn z.B. der obere linke Transistor 70 eingeschaltet wird, wird etwa gleichzeitig der untere rechte Transistor 76 eingeschaltet, und wenn der obere rechte Transistor 72 eingeschaltet wird, wird etwa gleichzeitig der untere linke Transistor 74 eingeschaltet.

Zum Zeitpunkt t1 der Fig. 2A hat das Signal u1 am Eingang 120 einen Wert von ca. 0,4 V, die Diode 130 wird leitend, und deshalb entspricht das Potenzial am Plus-Eingang 126 der Summe aus diesen 0,4 V und der Spannung an der Diode 130 (ca. 0,7 V), also zusammen etwa 1,1 V. Dies ist niedriger als das Potenzial am Minuseingang 124, das gemäß Formel (1) und (2) gleich ($U_B$/2 - 0,7 V) ist. Deshalb wird der Ausgang 102 im unteren Komparator 92 intern mit Masse 36 verbunden, so dass das $U_{GS}$ des Transistors 74 niedrig ist und dieser sperrt.

Über den Widerstand 110 wird das niedrige Potenzial am Gate G des unteren linken Transistors 74 zum Plus-Eingang 106 des oberen Komparators 90 übertragen. Dieses Potenzial ist niedriger als das Potenzial (0,7 V) am Minus-Eingang 104, so dass der Ausgang 100 des oberen Komparators 90 intern mit Masse 36 verbunden wird. Über den Spannungsteiler 134 (1,1 k) und 138 (3 k) erhält das Gate G des oberen linken Transistors 70 ein Potenzial von etwa 25 % der Betriebsspannung $U_B$, so dass der Transistor 70 zum Zeitpunkt t1 leitend ist, während der untere linke Transistor 74 sperrt.

Zum Zeitpunkt t2 der Fig. 2A ändert sich das Signal u1 von 0,4 V auf $U_B$/2. Dadurch sperrt die bisher leitende Diode 130, d.h. der untere Komparator 92 dient nun dazu, den Einschaltvorgang des unteren linken Transistors 74 abhängig vom Gate-Potenzial des oberen Transistors 70 zu steuern. Die Diode 108 wird jetzt leitend, und dadurch liegt am Plus-Eingang 106 des oberen linken Komparators 90 ein Potenzial von etwa ($U_B$/2 - 0,7 V). (Die 0,7 V entsprechen der Spannung an der Diode 108, und die $U_B$/2 entsprechen der Amplitude des Signals u1). Da dieses Potenzial ($U_B$/2 - 0,7 V) höher ist als das Referenzpotenzial von 0,7 V am Minus-Eingang 104 des oberen Komparators 90, wird dessen Ausgang 100 hochohmig, so dass über den Spannungsteiler aus den vier Widerständen 138, 134, 132 und 128 das Potenzial am Gate G des oberen Transistors 70 nach Plus gezogen wird und folglich der obere linke Transistor 70 sperrt.

Der Anstieg des Potenzials am Gate G des oberen Transistors 70 wird durch den Kondensator 96 etwas verzögert, d.h. dieser Kondensator bestimmt die Anstiegsgeschwindigkeit. Dazu tragen auch die parasitären Kapazitäten im Transistor 70 bei. Über die (gleich großen) Widerstände 132 und 128 wird der Anstieg des Potenzials am Ausgang 100 auf den Plus-Eingang 126 des unteren Komparators 92 übertragen. Erst wenn dieses Potenzial etwa das Zweifache des Wertes ($U_B$/2 - 0,7 V) erreicht hat, also der obere Transistor 70 sicher gesperrt ist, wird der untere Komparator 92 auf hochohmig umgeschaltet, so dass die Spannung am Gate G des unteren linken Transistors 74 so weit ansteigt, dass dieser Transistor leitend wird. Dabei wird über den Widerstand 110 das Potenzial am Plus-Eingang 106 des oberen Komparators 90 angehoben, so dass dessen Ausgang 100 hochohmig und der Transistor 70 sicher gesperrt bleibt.

Man erkennt also, dass die Potenzialänderung am Gate des Transistors 70 auf den Plus-Eingang 126 des unteren Komparators 92 übertragen wird. Wegen des Spannungsteilers 128, 132 muss der Anstieg etwas größer sein als das Doppelte von ($U_B$/2 - 0,7 V), und wenn das der Fall ist, wird der untere Transistor 74 eingeschaltet.

In diesem Fall wird also der obere Transistor 70 durch das Signal u1 über die obere Diode 108 direkt abgeschaltet, während die untere Diode 130 sperrt und den unteren Komparator 92 vom Signal u1 trennt, so dass dieser die Einschaltung des Transistors 74 so lange verzögern kann, bis der obere Transistor 70 sicher sperrt.

Zum Zeitpunkt t3 (Fig. 2) ändert sich das Signal u1 von $U_B$/2 auf 0,4 V. Hierdurch sperrt die Diode 108, die Diode 130 wird leitend, und der Plus-Eingang 126 des unteren Komparators 92 erhält ein Potenzial von etwa 0,4 V + 0,7 V =1,1 V. (Die 0,7 V entsprechen der Spannung an der Diode 130). Dadurch wird der Ausgang 102 des unteren Komparators 92 intern mit der Leitung 36 verbunden, wodurch der Transistor 74 (nach Entladen des Kondensators 98) sperrt.

Es ist hier darauf hinzuweisen, dass die Spannungswerte 0,4 V und 0,7 V ungefähre Werte für ein Zahlenbeispiel sind, und dass in der Realität abweichende Werte vorkommen können.

Die Änderung des Potenzials am Ausgang 102 wird über die Widerstände 112, 110 auf den Plus-Eingang 106 des oberen Komparators 90 übertragen. Wird das Potenzial am Eingang 106 niedriger als das Potenzial (0,7 V) am Minus-Eingang 104, so wird der Ausgang 100 des oberen Komparators auf das Potenzial der negativen Leitung 36 herabgezogen, so dass die Spannung $U_{SG}$ zwischen Source und Gate des oberen Transistors 70 entsprechend ansteigt und dieser eingeschaltet wird.

Der obere Transistor 70 wird also erst eingeschaltet, wenn die Gate-Source-Spannung $U_{GS}$ des unteren Transistors 74 auf einen Wert unterhalb der Bezugsspannung von 0,7 V am Plus-Eingang 104 gefallen ist, d.h. wenn sich der untere Transistor 74 im sicheren, hochohmigen Bereich befindet. Über die Widerstände 128, 132 erhält dabei der Plus-Eingang 126 ein niedrigeres Potenzial, so dass der Ausgang des Komparators 92 niederohmig bleibt und den Transistor 74 gesperrt hält. Zum Zeitpunkt t3 wird also der bisher leitende untere Transistor 74 gesperrt, und erst wenn er sicher gesperrt ist, wird der obere Transistor 70 eingeschaltet.

Man erkennt, dass jeweils eine der Dioden 108, 130 dazu dient, einen der beiden Transistoren 70, 74 sofort zu sperren, wenn sich das Signal u1 ändert, während die andere Diode blockiert und dadurch den Betrieb des ihr zugeordneten Komparators als Komparator ermöglicht. Dieser Komparator vergleicht das - variable - Potenzial an seinem Plus-Eingang mit einer Referenzspannung, die bei diesem Beispiel für den oberen Komparator 90 0,7 V beträgt und für den unteren Komparator 92 einen Wert von ($U_B$/2 - 0,7 V) hat, d.h. beim unteren Komparator 92 ist diese Referenzspannung eine Funktion der Spannung $U_B$ und ändert sich mit dieser. Dies ermöglicht einen sicheren Betrieb auch dann, wenn sich die Spannung $U_B$ im Betrieb stark ändert, z.B. durch Ladung oder Entladung der dargestellten Pufferbatterie 40.

**Fig. 3** zeigt eine beispielhafte Ausführungsform für die Schaltung 30 (Fig. 1) in einer vereinfachten Ausführung, bei der der Zeitpunkt der Kommutierung nicht von der Drehzahl abhängig ist.

Fig. 3 verwendet zwei Komparatoren 150, 152, deren Eingängen das Ausgangssignal des Hallgenerators 28 wie dargestellt mit umgekehrter Polarität zugeführt wird. Beide Komparatoren 150, 152 sind (wie die Komparatoren 90, 92) Komparatoren mit offenem Kollektor, d.h. wenn beim Komparator 150 das Potenzial am positiven Eingang höher ist als das am negativen Eingang, ist sein Ausgang 32 hochohmig, und wenn das Potenzial am positiven Eingang niedriger ist als am negativen Eingang, wird der Ausgang 32 intern mit der negativen Leitung 36 verbunden, so dass man am Ausgang 32 ein Potenzial von ca. +0,4 V, bezogen auf die negative Leitung 36, erhält.

Der Ausgang 32 ist über einen Widerstand 154 mit der positiven Leitung 34 und über einen Widerstand 156 mit der negativen Leitung 36 verbunden. Die Widerstände 154, 156 sind gleich groß, d.h. wenn der Ausgang 32 hochohmig ist, erhält er durch die Widerstände 154, 156 das Potenzial $U_B$/2.

Dasselbe gilt analog für den Komparator 152, dessen Ausgang 33 über einen Widerstand 158 mit der positiven Leitung 34 und über einen Widerstand 160 mit der negativen Leitung 36 verbunden ist. Auch die Widerstände 158, 160 sind gleich groß, so dass sich ebenfalls am Ausgang 33 das Potenzial $U_B$/2 ergibt, wenn dieser Ausgang hochohmig ist, und das Potenzial 0,4 V, wenn dieser Ausgang intern mit der negativen Leitung 36 verbunden ist.

Die Amplitude der Signale u1, u2 ist also direkt proportional zur Spannung $U_B$, welche sich im Betrieb in weiten Grenzen ändern kann.

Da auch das Referenzpotenzial am Punkt 52 der Fig. 1 abhängig von der Spannung $U_B$ ist, nämlich gemäß Gleichung (1) den Wert ($U_B$/2 - 0,7 V) hat, können die vier Komparatoren 90, 90', 92, 92' auch dann die Vollbrückenschaltung 78 sicher steuern, wenn sich die Spannung $U_B$ ändert. Denn die Spannungen, die durch die Komparatoren 92, 92' miteinander verglichen werden müssen, ändern sich im gleichen Sinn. Naturgemäß könnte man statt $U_B$/2, also dem Faktor 0,5, auch einen anderen Faktor wählen, z.B. 0,6 * $U_B$, oder 0,4 * $U_B$, wobei dann die Widerstände 44, 46, 128, 132, 154, 156, 158 und 160 entsprechend angepasst werden müssten. Die Lösung mit dem Faktor 0,5 wird aber bevorzugt, weil man hierbei identische Widerstände mit niedrigen Toleranzen verwenden kann.

Naturgemäß sind im Rahmen der vorliegenden Erfindung vielfache Abwandlungen und Modifikationen möglich.

## Patentansprüche

1. Verfahren zum Kommutieren eines elektronisch kommutierten Motors (20), welcher Motor aufweist:

Eine positive Anschlussleitung (34) und eine negative Anschlussleitung (36); einen Stator mit mindestens einem Wicklungsstrang (22);
einen permanentmagnetischen Rotor (26);
einen Rotorstellungssensor (28) zur Erzeugung mindestens eines von der Stellung dieses Rotors (26) abhängigen Rotorstellungssignals (u1, u2);
eine dem mindestens einen Wicklungsstrang (22) zugeordnete, durch den Rotorstellungssensor (28) steuerbare Vollbrückenschaltung (78), welche als MOSFETs ausgebildete obere Transistoren (70, 72) aufweist, die die Verbindung des mindestens einen Wicklungsstrangs (22) zur positiven Anschlussleitung (34) steuern,
und welche als zu den oberen Transistoren (70, 72) komplementäre MOSFETs ausgebildete untere Transistoren (74, 76) aufweist, die die Verbindung des mindestens einen Wicklungsstrangs (22) zur negativen Anschlussleitung (36) steuern,
wobei jeweils in einem Brückenzweig zwei komplementäre MOSFET-Transistoren (z.B. 70, 74) in Reihe geschaltet sind,
und jedem MOSFET-Transistor der Vollbrückenschaltung (78) zu seiner Steuerung ein Komparator (90, 90', 92, 92') zugeordnet ist,
mit folgenden Verfahrensschritten:

Bei einer vorgegebenen Änderung des Rotorstellungssignals (u1, u2) wird, gesteuert durch diese Signaländerung, der abzuschaltende MOSFET-Transistor eines Brückenzweigs über den ihm zugeordneten Komparator abgeschaltet;

während der Abschaltung des abzuschaltenden MOSFET-Transistors wird durch den dem einzuschaltenden MOSFET-Transistor dieses Brückenzweigs zugeordneten Komparator das Gate-Potenzial des abzuschaltenden MOSFET-Transistors überwacht;

nachdem dieses Gate-Potenzial einen Wert erreicht hat, der für ein Abschalten des abzuschaltenden MOSFET-Transistors charakteristisch ist, wird der einzuschaltende MOSFET-Transistor durch den ihm zugeordneten Komparator eingeschaltet.

2. Elektronisch kommutierter Motor (20), welcher aufweist:

Eine positive Anschlussleitung (34) und eine negative Anschlussleitung (36); einen Stator mit mindestens einem Wicklungsstrang (22);

einen permanentmagnetischen Rotor (26);

einen Rotorstellungssensor (28) zur Erzeugung mindestens eines von der Stellung dieses Rotors (26) abhängigen Rotorstellungssignals (u1, u2);

eine dem mindestens einen Wicklungsstrang (22) zugeordnete, durch den Rotorstellungssensor (28) steuerbare Vollbrückenschaltung (78), welche als p-Kanal-MOSFETs ausgebildete obere Transistoren (70, 72) aufweist, die die Verbindung des mindestens einen Wicklungsstrangs (22) zur positiven Anschlussleitung (34) steuern, und welche als n-Kanal-MOSFETs ausgebildete untere Transistoren (74, 76) aufweist, die die Verbindung des mindestens einen Wicklungsstrangs (22) zur negativen Anschlussleitung (36) steuern, wobei jeweils in einem Brückenzweig ein p-Kanal-MOSFET und ein n-Kanal-MOSFET in Reihe geschaltet sind, und jedem MOSFET der Vollbrückenschaltung (78) zu seiner Steuerung ein Komparator (90, 90', 92, 92') zugeordnet ist, von denen bei einer Kommutierung der eine, gesteuert durch das Rotorstellungssignal (u1, u2), den im Augenblick abzuschaltenden Transistor des betreffenden Brückenzweigs nichtleitend steuert, und der andere Komparator ein von der Source-Gate-Spannung des abzuschaltenden Brückentransistors abhängiges Signal mit einer Referenzspannung vergleicht, um den von diesem anderen Komparator gesteuerten Brückentransistor erst einzuschalten, wenn diese Source-Gate-Spannung ihrem Betrag nach einen vorgegebenen Wert unterschreitet.

3. Motor nach Anspruch 2, bei welchem das Rotorstellungssignal (u1, u2) den beiden Komparatoren (90, 92) eines Brückenzweigs jeweils über eine Diode (108, 130) zugeführt wird, wobei die Diode (108) des einen Komparators (90) umgekehrt gepolt ist wie die Diode (130) des anderen Komparators (92).

4. Motor nach Anspruch 3, bei welchem die Dioden (108, 130) so gepolt sind, dass jeweils die Diode des Komparators, der dem einzuschaltenden Brückentransistor zugeordnet ist, sperrt, um mittels dieses Komparators einen Vergleich des Gate-Potenzials des abzuschaltenden Brückentransistors mit einer vorgegebenen Referenzspannung zu ermöglichen.

5. Motor nach Anspruch einem der Ansprüche 2 bis 4, bei welchem mindestens eine der Referenzspannungen (vgl. Gleichung 1) eine Funktion der Betriebsspannung ($U_B$) des Motors (20) ist.

6. Motor nach einem der Ansprüche 2 bis 5, bei welchem die Amplitude ($U_B/2$) des Rotorstellungssignals (u1, u2) eine Funktion der Betriebsspannung ($U_B$) des Motors (20) ist.

7. Motor nach einem der Ansprüche 2 bis 6, bei welchem die Signaländerung am Gate mindestens eines Transistors (70, 72, 74, 76) der Vollbrücke (78) durch eine Kapazität (96, 96', 98, 98') verzögert ist.

8. Motor nach Anspruch 7, bei welchem als Kapazität zur Verzögerung der Signaländerung am Gate eines Transistors der Vollbrücke eine interne parasitäre Kapazität dieses Transistors dient.

9. Motor nach einem der Ansprüche 2 bis 8, bei welchem die Komparatoren (90, 92) eines Brückenzweigs etwa nach Art eines bistabilen Glieds miteinander verbunden (110, 132) sind, um nach einer Kommutierung einen stabilen Schaltzustand zu erreichen, solange sich das Rotorstellungssignal (u1, u2) nicht oder nicht wesentlich ändert.

**Claims**

1. Process for commutating an electronically commutated motor (20), said motor having:

    a positive connection line (34) and a negative connection line (36);
    a stator with at least one winding train (22);
    a permanent magnet rotor (26);
    a rotor position sensor (28) to generate at least one rotor position signal (u1, u2) dependent on the position of this rotor (26);
    a full bridge circuit (78) allocated to the at least one winding train (22) and controllable via the rotor position sensor (28), said circuit having upper transistors (70, 72) which are formed as MOSFETs and control the connection of the at least one winding train (22) to the positive connection line (34), and having lower transistors (74, 76) which are formed as MOSFETs complementary to the upper transistors (70, 72) and which control the connection of the at least one winding train (22) to the negative connection line (36);

    wherein two complementary MOSFET transistors (e.g. 70, 74) are connected in series in a respective bridge branch, and a comparator (90, 90', 92, 92') is allocated to each MOSFET transistor of the full bridge circuit (78) for its control, with the following process steps:

    on a prespecified change in the rotor position signal (u1, u2), controlled by this signal change, the MOSFET transistor to be switched off in a bridge branch is switched off via the comparator allocated to it; during disconnection of the MOSFET transistor to be switched off, the comparator allocated to the MOSFET transistor to be switched on in this bridge branch monitors the gate potential of the MOSFET transistor to be switched off; after this gate potential has reached a value characteristic for disconnection of the MOSFET transistor to be switched off, the MOSFET transistor to be switched on is connected by the comparator allocated to it.

2. Electronically commutated motor (20) having:

    a positive connection line (34) and a negative connection line (36);
    a stator with at least one winding train (22);
    a permanent magnet rotor (26);
    a rotor position sensor (28) to generate at least one rotor position signal (u1, u2) dependent on the position of this rotor (26);
    a full bridge circuit (78) allocated to the at least one winding train (22) and controllable via the rotor position sensor (28), said circuit having upper transistors (70, 72) which are formed as p-channel MOSFETs and which control the connection of the at least one winding train (22) to the positive connection line (34), and having lower transistors (74, 76) which are formed as n-channel MOSFETs and which control the connection of the at least one winding train (22) to the negative connection line (36);

    wherein a p-channel MOSFET and an n-channel MOSFET are connected in series in a respective bridge branch, and allocated to each MOSFET of the full bridge circuit (78) for its control is a comparator (90, 90', 92, 92'), one of which on commutation, controlled by the rotor position signal (u1, u2), controls non-conductively the transistor to be momentarily switched off in the bridge circuit concerned, and the other comparator compares a signal dependent on the source gate voltage of the bridge transistor to be switched off with a reference voltage in order to switch on the bridge transistor controlled by this second comparator only when this source gate voltage falls in level below a prespecified value.

3. Motor according to claim 2, in which the rotor position signal (u1, u2) is supplied to the two comparators (90, 92) of a bridge branch via a respective diode (108, 130), wherein the diode (108) of the one comparator (90) has the reverse polarity of the diode (130) of the other comparator (92).

4. Motor according to claim 3, in which the diodes (108, 130) have polarity such that the diode of the comparator allocated to the bridge transistor to be switched on blocks in order to allow, by means of this comparator, comparison of the gate potential of the bridge transistor to be switched off with a prespecified reference voltage.

5. Motor according to any of claims 2 to 4, in which at least one of the reference voltages (see equation 1) is a function of the operating voltage ($U_B$) of the motor (20).

**6.** Motor according to any of claims 2 to 5, in which the amplitude ($U_B/2$) of the rotor position signal (u1, u2) is a function of the operating voltage ($U_B$) of the motor (20).

**7.** Motor according to any of claims 2 to 6, in which the signal change at the gate of at least one transistor (70, 72, 74, 76) of the full bridge (78) is delayed by a capacitor (96, 96', 98, 98').

**8.** Motor according to claim 7, in which an internal parasitic capacitance of this transistor serves as a capacitor to delay the signal change at the gate of a transistor of the full bridge.

**9.** Motor according to any of claims 2 to 8, in which the comparators (90, 92) of a bridge branch are connected together approximately in the manner of a bistable element (110, 132) in order after commutation to achieve a stable switching state as long as the rotor position signal (u1, u2) does not change or does not change substantially.

**Revendications**

**1.** Procédé de commutation d'un moteur à commutation électronique (20), lequel moteur présente :

une ligne de connexion positive (34) et une ligne de connexion négative (36) ;
un stator avec au moins une phase d'enroulement (22) ;
un rotor à aimant permanent (26) ;
un capteur de position de rotor (28) pour générer au moins un signal de position de rotor (u1, u2) dépendant de la position de ce rotor (26) ;
un circuit en pont intégral (78) associé à ladite au moins une phase d'enroulement (22), pouvant être commandé par le capteur de position de rotor (28), lequel présente des transistors supérieurs (70, 72) réalisés sous la forme de MOSFET, qui commandent la liaison de ladite au moins une phase d'enroulement (22) avec la ligne de connexion positive (34),
et lequel présente des transistors inférieurs (74, 76) réalisés sous la forme de MOSFET complémentaires aux transistors supérieurs (70, 72), qui commandent la liaison de ladite au moins une phase d'enroulement (22) avec la ligne de connexion négative (36),
deux transistors MOSFET complémentaires (par exemple 70, 74) étant chaque fois branchés en série dans une branche du pont,
et un comparateur (90, 90', 92, 92') étant associé à chaque transistor MOSFET du circuit en pont intégral (78) pour sa commande,
comprenant les étapes de procédé suivantes :

lors d'une variation prédéfinie du signal de position de rotor (u1, u2), le transistor MOSFET à désactiver d'une branche de pont est, de manière commandée par cette variation de signal, désactivé par le comparateur qui lui est associé ;
pendant la désactivation du transistor MOSFET à désactiver, le comparateur associé au transistor MOSFET à activer de cette branche de pont surveille le potentiel de grille du transistor MOSFET à désactiver ;
après que ce potentiel de grille a atteint une valeur qui est caractéristique d'une désactivation du transistor MOSFET à désactiver, le transistor MOSFET à activer est activé par le comparateur qui lui est associé.

**2.** Moteur à commutation électronique (20), lequel présente :

une ligne de connexion positive (34) et une ligne de connexion négative (36) ;
un stator avec au moins une phase d'enroulement (22) ;
un rotor à aimant permanent (26) ;
un capteur de position de rotor (28) pour générer au moins un signal de position de rotor (u1, u2) dépendant de la position de ce rotor (26) ;
un circuit en pont intégral (78) associé à ladite au moins une phase d'enroulement (22), pouvant être commandé par le capteur de position de rotor (28), lequel présente des transistors supérieurs (70, 72) réalisés sous la forme de MOSFET à canal P, qui commandent la liaison de ladite au moins une phase d'enroulement (22) avec la ligne de connexion positive (34),
et lequel présente des transistors inférieurs (74, 76) réalisés sous la forme de MOSFET à canal N, qui commandent la liaison de ladite au moins une phase d'enroulement (22) avec la ligne de connexion négative (36),
un transistor MOSFET à canal P et un transistor MOSFET à canal N étant chaque fois branchés en série dans une branche du pont,
et un comparateur (90, 90', 92, 92') étant associé à chaque transistor MOSFET du circuit en pont intégral (78) pour sa commande, dont l'un, lors d'une commutation, de manière commandée par le signal de position de rotor (u1, u2), rend non conducteur le transistor à désactiver, actuellement conducteur, de la branche de pont concernée,
et l'autre comparateur compare un signal dépendant de la tension source-grille du transistor de pont à désactiver avec une tension de référence pour activer le transistor de pont commandé par cet autre comparateur seulement si cette tension source-grille devient inférieure en valeur absolue à une valeur prédéfinie.

3. Moteur selon la revendication 2, dans lequel le signal de position de rotor (u1, u2) est amené aux deux comparateurs (90, 92) d'une branche de pont chaque fois par l'intermédiaire d'une diode (108, 130), la diode (108) d'un comparateur (90) étant polarisée en sens inverse de la diode (130) de l'autre comparateur (92).

4. Moteur selon la revendication 3, dans lequel les diodes (108, 130) sont polarisées de façon que la diode du comparateur qui est chaque fois associé au transistor de pont à activer soit bloquante afin de permettre une comparaison du potentiel de grille du transistor de pont à désactiver avec une tension de référence prédéfinie au moyen de ce comparateur.

5. Moteur selon l'une des revendications 2 à 4, dans lequel au moins une des tensions de référence (voir équation 1) est une fonction de la tension de fonctionnement ($U_B$) du moteur (20).

6. Moteur selon l'une des revendications 2 à 5, dans lequel l'amplitude ($U_B/2$) du signal de position de rotor (u1, u2) est une fonction de la tension de fonctionnement ($U_B$) du moteur (20).

7. Moteur selon l'une des revendications 2 à 6, dans lequel la variation de signal à la grille d'au moins un transistor (70, 72, 74, 76) du pont intégral (78) est retardée par une capacité (96, 96', 98, 98').

8. Moteur selon la revendication 7, dans lequel on utilise en guise de capacité pour retarder la variation de signal à la grille d'un transistor du pont intégral une capacité parasite interne de ce transistor.

9. Moteur selon l'une des revendications 2 à 8, dans lequel les comparateurs (90, 92) d'une branche de pont sont reliés ensemble (110, 132) à peu près à la manière d'un élément bistable pour, après une commutation, atteindre un état de commutation stable tant que le signal de position de rotor (u1, u2) ne varie pas ou pas de façon significative.

Fig. 1

Fig.2

Fig. 3

## EP 1 472 783 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4376261 A